# EUROPEAN PATENT APPLICATION

(11) **EP 1 407 987 A1**
(43) Date of publication of application: **14.04.2004**
(21) Application number: 03078196.7
(22) Date of filing: 09.10.2003
(51) Int. Cl.: B65G 25/10

(54) **Improved device for conveying objects**

(30) Priority: 11.10.2002 BE 200200585
(71) Applicant: Constructie Werkhuizen Demaitere, besloten vennootschap met beperkte aansprakelijkheid, 8890 Moorslede (BE)
(72) Inventor: Demaitere, Philip Johan Chris, 8890 Moorslede (BE)
(74) Representative: Donné, Eddy

(57) **Abstract**

Improved device for conveying objects which mainly consists of one or several guides (4); one or several U-shaped struts (5) which can be moved to and fro; and finally carriers (14) provided between the flanges (9) of the aforesaid struts (5) and which are equipped with a shaft which is bearing-mounted with its far ends (18) on either side of the carrier (14) in two opposite passages (12) in the flanges (9), characterised in that the above-mentioned passages (12) are connected to the free edges (8) of the flanges (9) concerned by means of grooves (13), and in that the journals (18) have a diameter which is somewhat smaller than the diameter of an aforesaid passage (12).

## Description

The present invention concerns an improved device for conveying objects, such as boxes, tins, dishes or the like.

The invention in particular concerns a device of the type which mainly consists of one or several guides upon which the objects to be conveyed are provided such that they can be moved; one or several U-shaped struts directed according to the conveying direction extending under the objects to be conveyed and which can be moved to and fro in their longitudinal direction; and finally carriers provided at a distance from each other between the flanges of the aforesaid struts and which are provided with a shaft which is bearing-mounted with its far ends on either side of the carrier in two opposite passages in the flanges of the strut concerned, whereby the part of the carrier on one side of the aforesaid shaft is heavier than the part on the other side of the shaft, and whereby this heavier part, when the carrier is in rest position, rests on the bottom of the U-shaped strut concerned, while the lighter part protrudes from the strut with its free end in this position.

It is known that with such known embodiments, when the U-shaped struts make a to movement in the conveying direction, the objects to be moved are carried along in the conveying direction by the carriers, while in the fro movement, in the opposite direction of the conveyance, the carriers can pass freely under the objects to be moved without thereby moving the objects, such that as a result of consecutive to and fro movements, the objects to be conveyed will be gradually moved to the far end of the device.

It is known that the aforesaid flanges of the U-shaped struts in which the carriers are provided are usually equipped with a relatively large number of passages which are provided opposite to each other in pairs and which are situated at short, equal distances between them.

An advantage of such a relatively large number of passages is that the carriers, as a function of the requirements, for example as a function of the dimensions of the objects to be moved or as a function of the desired in-between distance between the objects to be moved, can be provided in the struts with a larger or smaller in-between distance.

It is also known that the aforesaid carriers are provided in the struts by means of through-feed shafts which run through two opposite passages at every so many passages and which are kept in place by means of nuts and washers provided on a threaded part at the far ends of these through-feed shafts.

A first disadvantage of such known devices is that applying the carriers is very time-consuming.

Another disadvantage of such known devices is that moving the carriers in the U-shaped struts is very time-consuming as well, since the aforesaid nuts and through-feed shafts have to be dismounted first and since, subsequently, after the carriers have been moved, they also have to be put back and be fixed.

Another disadvantage is that tools are required to apply and/or move the carriers.

Yet another disadvantage is that it is not excluded for the nuts, washers and through-feed shafts to fall on the floor and get lost when being dismounted in order to adjust the device.

An additional disadvantage is that the nuts of the through-feed shafts can become detached due to vibrations of the to and fro movements, as a result of which the through-feed shafts may fall out of the carriers and the carriers concerned are consequently put out of order, so that objects can get stuck in this place and the conveyance of the objects can become obstructed.

The present invention aims to remedy these and other disadvantages.

To this end, the invention concerns an improved device of the aforesaid type, whereby the aforesaid passages are connected to the free edges of the flanges concerned of the U-shaped strut by means of grooves, and whereby the free ends of the aforesaid shaft of every carrier have a diameter which is somewhat smaller than the diameter of an aforesaid passage.

An advantage of such a device according to the invention is that the place of the carriers in the U-shaped strut can be adjusted in a very simple and fast manner by simply taking the carriers with the far ends of their shafts out of the struts via the aforesaid grooves and by putting them back in the opposite sense in another place in the strut concerned.

Another advantage is that, in order to move the carriers, no extra tools are required and that no parts such as nuts and washers have to be dismounted, so that there is not any danger for such loose parts to get lost while adjusting the device.

Also when one wishes to reverse the carriers in order to move the objects in the opposite sense, this can be done in the same fast manner without using any tools.

Such a transport device according to the invention can be used for conveying all sorts of objects, but it is particularly suitable for conveying pot plants which are placed with several pots next to one another in dishes in nurseries or the like which are systematically moved from the starting point of the conveyor line to the end of the conveyor line as the plants grow.

Given the large variety of dishes which are used in such nurseries and the required in-between distances between these dishes, it is indeed important that the carriers in this application can be positioned quickly and smoothly.

In order to better explain the characteristics of the invention, the following preferred embodiment of an improved device according to the invention for conveying objects is described as an example only without being limitative in any way, with reference to the accompanying drawings, in which:
figure 1 schematically represents an improved device according to the invention for conveying objects, in particular dishes with plants, in perspective;
figure 2 represents the part indicated by F2 in figure 1 to a larger scale;
figure 3 is an exploded view of the part represented in figure 2;
figure 4 represents a section according to line IV-IV in figure 2;
figure 5 represents a section according to line V-V in figure 4;
figure 6 represents a section according to line VI-VI in figure 4;
figures 7 to 10 represent views as in figure 4, but for various successive positions during the use of the improved device for conveying objects;
figures 11 and 12 represent views as in figure 4, but for two other positions.

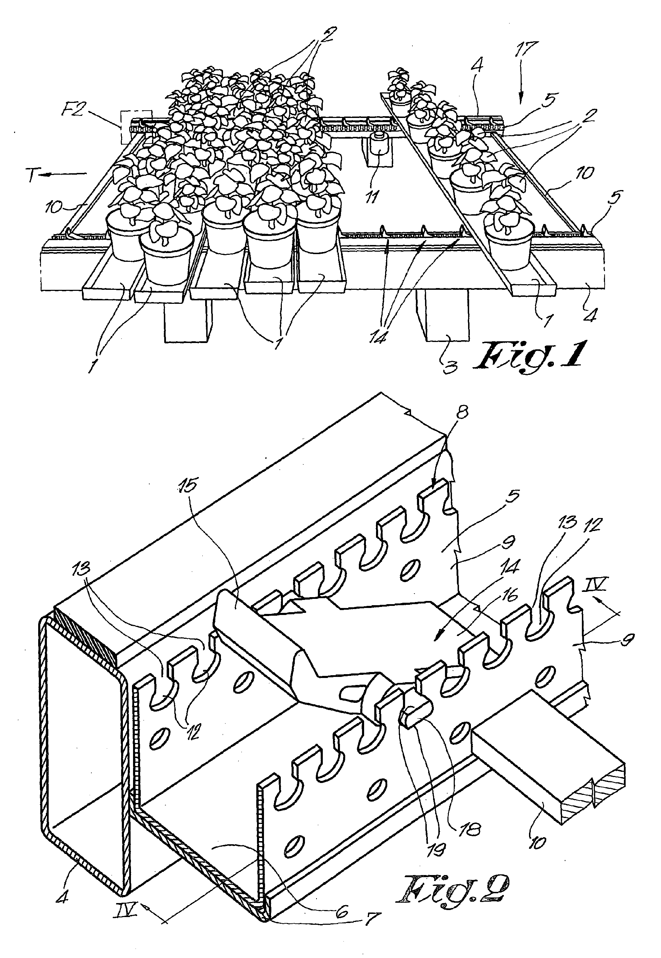

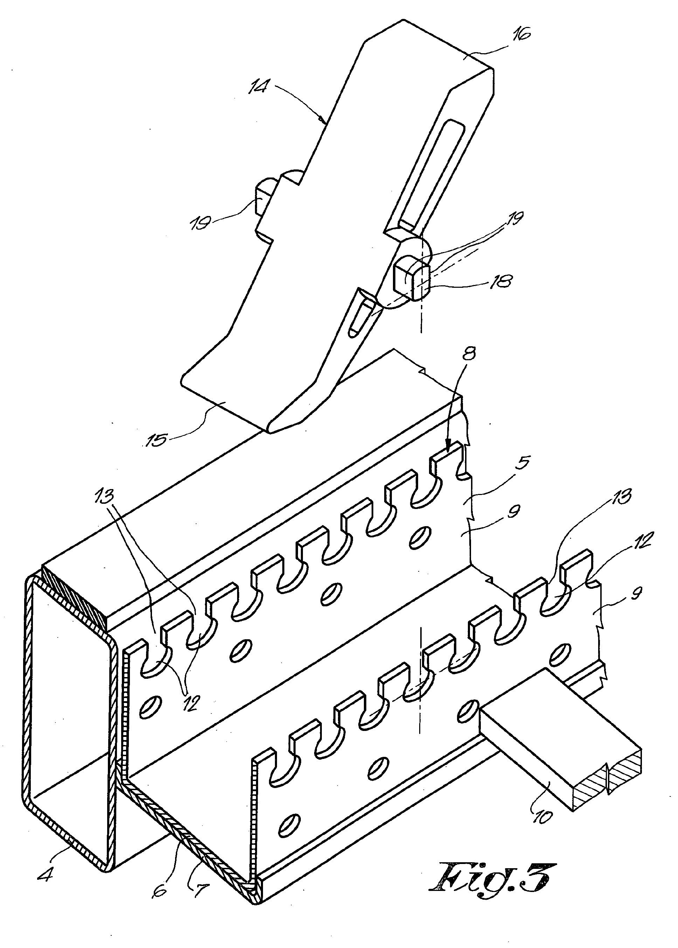

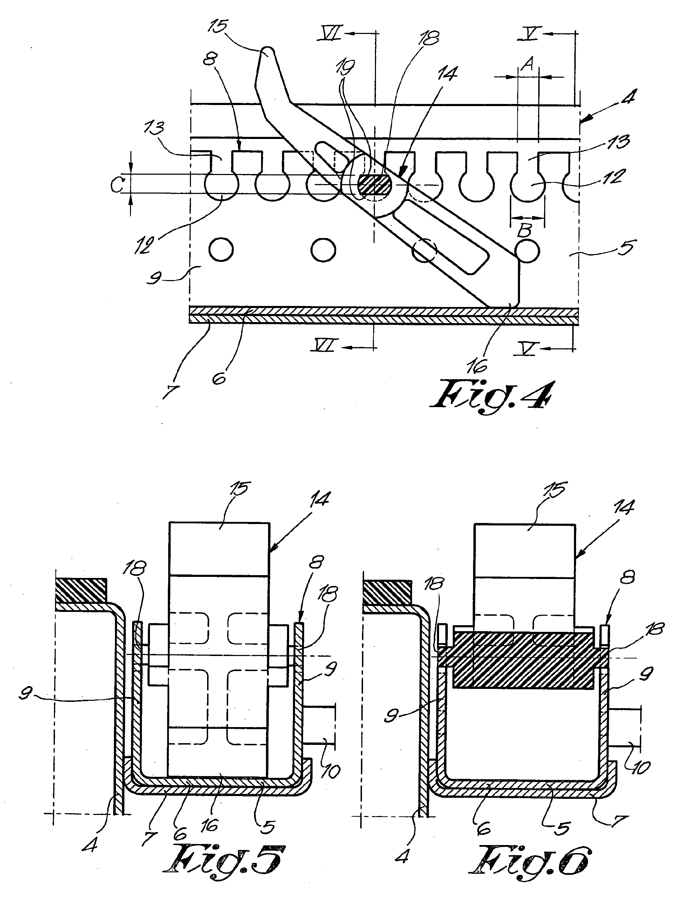

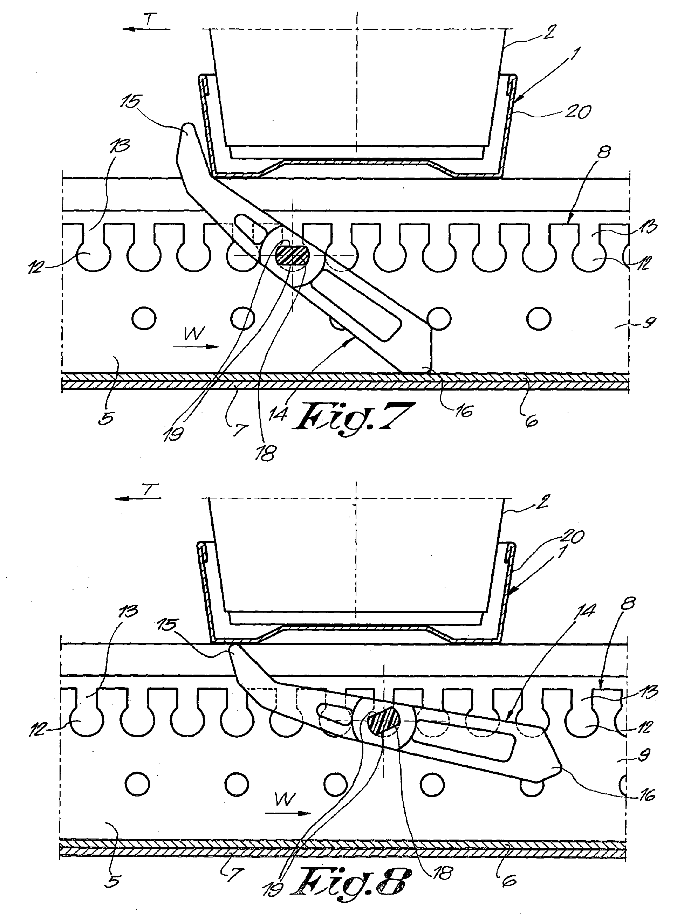

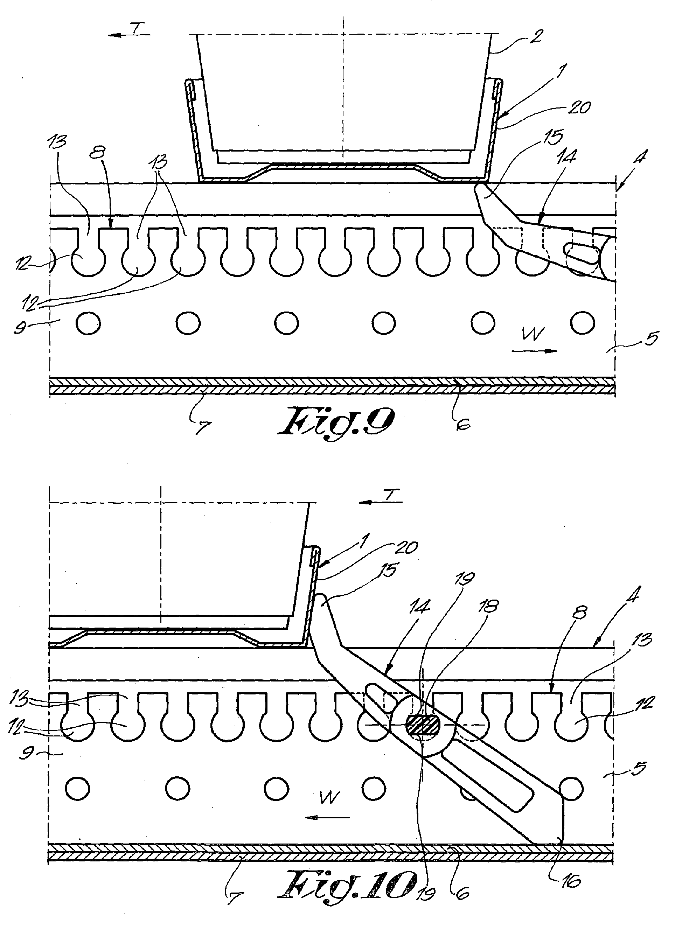

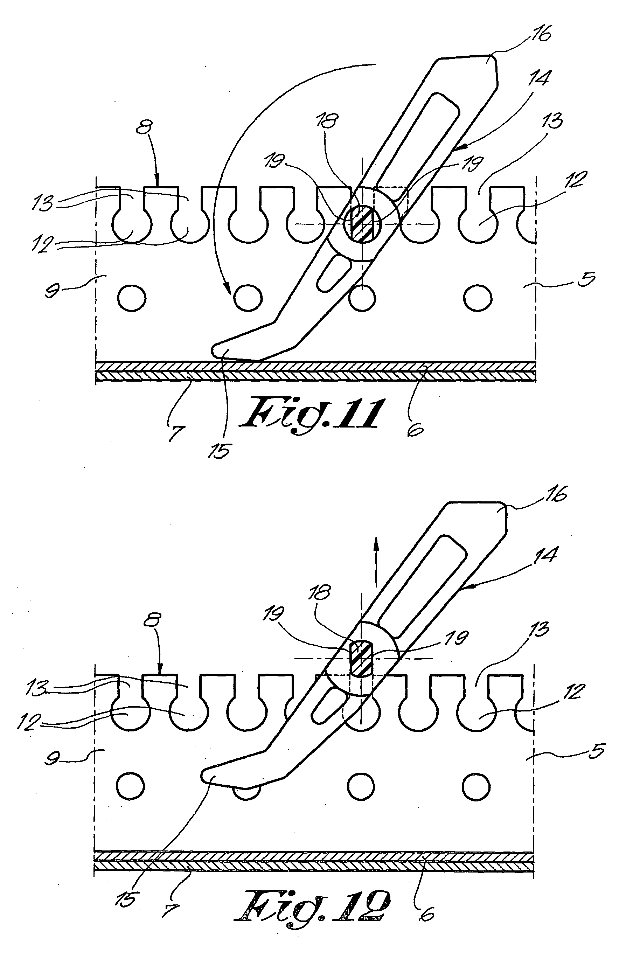

Figures 1 to 12 represent an improved device according to the invention for conveying objects, for example dishes 1 in which pot plants 2 are placed next to each other.

This device mainly consists of a frame 3 upon which are provided two parallel guides 4 extending in the conveying direction, represented by arrow T, and which in this case are formed of two tubular beams onto which is fixed a slide strip, made of Teflon or the like, on the top side.

Between the aforesaid guides 4 are provided, parallel thereto, two U-shaped struts 5 which are provided with their back 6 in a guide 7 in the given example, such that they can slide, for example in the shape of a groove or the like fixed to the frame 3 or to an aforesaid guide 4, in such a manner that the free edges 8 of the flanges 9 of the U-shaped struts 5 are situated lower than the top side of the guides 4.

The aforesaid U-shaped struts 5 are connected to each other by means of cross connections 10 and they are coupled to common drive means 11 known as such, which allow the struts 5 to move to and fro in their longitudinal direction.

In the flanges 9 of the struts 5, at a fixed distance from the free edges 8, are provided identical circular passages 12 situated in pairs opposite to each other and which are situated at regular distances from each other.

Each of the passages 12 is connected to the free edge 8 of the flange 9 concerned according to the invention by means of a continuous groove 13 having a width A which is smaller than the diameter B of the passages 12.

Between the flanges 9 of the struts 5 are provided carriers 14 at regular distances from each other which in this case have a predominantly wedge-shaped body with a top end 15 and a lower end 16 directed to the beginning 17 of the device.

The carriers 14 are each provided with a horizontal shaft which is in this case formed in one piece with the body of the carrier 14 concerned and which is formed of protruding journals 18 which are bearing-mounted in two passages 12 situated opposite to each other in the flanges 9 of the U-shaped strut 5 concerned.

In the given example, the aforesaid journals 18 have a diameter which is somewhat smaller than the diameter of a passage 12 and which are provided with two parallel sides 19 situated opposite to each other whereby the distance C of these sides 19 is equal to or somewhat smaller than the width A of the grooves 13.

The shape and dimensions of the carriers 14 are such that the part of the carriers 14 on one side of the shaft, namely on the far end 16, is heavier than the part on the other side of the shaft, such that each carrier 14, as represented in figure 4, automatically assumes an inclined position when in rest, whereby the heavier far end 16 rests on the back 6 of the strut 5 concerned, while the far end 15 protrudes above the strut 5 and above the guides 4, whereby the sides 19 of the journals 18 are parallel to the back 6 of the struts 5 in this position, are perpendicular to the longitudinal direction of the grooves 13 respectively.

The working of the device 1 is very simple and is represented step by step by means of figures 7 to 10.

A dish 1 with pot plants 2 to be conveyed is loaded at the starting point 17 of the device, diagonally to the guides 4, as represented in figures 1 and 7.

When the drive means 11 are excited, the U-shaped struts 5, together with the carriers 14 provided therein, are moved to and fro in their longitudinal direction.

When there is a movement in the sense of arrow W in figure 7, in particular in the opposite sense of the conveying direction T, the carriers 14, as represented in figures 8 and 9, can move freely under a dish 1, whereby the carriers 14 can tilt counter clockwise in an unhindered manner in this case, as the journals 18 rotate in the corresponding passages 12.

Once the carriers 14 have gone past the dish 1, they automatically turn back to their rest position, as represented in figure 10, whereby the far ends 15 protrude above the guides 4 again.

In the case of a movement according to the conveying direction T, as represented in figure 10, the far end 15 of the carriers 14 makes contact with the side wall 20 of a dish 1 turned towards the starting point of the device, and the dish 1, as the carriers 14 cannot tilt clockwise as of their rest position, will be carried along in the conveying direction T by the carriers 14 until the movement of the struts 5 is reversed again and the carriers can again freely move under the dish 1.

Thanks to successive to and fro movements of the struts 5, the dish 1 is thus moved step by step from the starting point 17 of the device to the far end of this device.

Figures 11 and 12 show that a carrier 14 according to the invention can be very easily taken out of the struts 5 without any tools, can be provided in it again respectively.

The carriers 14 are tilted to this end until the levelled sides 19 of the journals 18 of the shaft of the carrier 14 concerned are situated in the extension of the grooves 13, after which the carrier 14 can be lifted out of the passages 12 and grooves 13 in the vertical direction.

The sides 19 of the journals 18 are preferably oriented such that they are parallel to the longitudinal direction of the grooves 13 when the carrier 14 concerned has tilted such that it lies against the back 6 of the strut 5 concerned with its far end 15, whereby the carrier 14 can be removed from the strut 5 in the aforesaid simple manner. It is clear that the position of the carrier 14 which corresponds to figures 11 and 12 is a position which does not occur when the device is used in a normal manner, such that, since the carrier 14 can only be taken out of the strut in this position, it is prevented from being accidentally pushed out of the strut 5 during use.

From what precedes follows that a carrier 14 can also be placed back in a strut 5 very quickly and without any tools in the opposite sense, for example at another location, in order to account for the different shapes and dimensions of a new series of dishes 1 to be conveyed or for another required distance between the dishes 1 or, in the opposite position, to convey the dishes 1 in a direction opposite to the one described above.

It is clear that the shaft of the carriers 14 must not necessarily be made in one piece and out of the same material as the body of the carriers 14, but that this shaft can for example also be realised by providing a separate shaft in the body of the carrier 14 such that it cannot rotate or by means of two separate coaxial journals 18 to be fixed in any way whatsoever on either side of the carrier 14.

The invention is by no means limited to the above-described embodiments given as an example and represented in the accompanying drawings; on the contrary, such an improved device for conveying objects according to the invention can be made in all sorts of shapes and dimensions while still remaining within the scope of the invention.

## Claims

1. Improved device for conveying objects which mainly consists of one or several guides (4) upon which the objects to be conveyed are provided such that they can be moved; one or several U-shaped struts (5) directed according to the conveying direction (T) extending under the objects to be conveyed and which can be moved to and fro in their longitudinal direction; and finally carriers (14) provided at a distance from each other between the flanges (9) of the aforesaid struts (5) and which are provided with a shaft which is bearing-mounted with its far ends (18) on either side of the carrier (14) in two opposite passages (12) in the flanges (9) of the strut (5) concerned, whereby the part of the carrier (14) on one side of the aforesaid shaft is heavier than the part on the other side of the shaft, and whereby this heavier part, when the carrier (14) is in rest position, rests on the back (6) of the U-shaped strut (5) concerned, while the lighter part protrudes with its free end (15) from the strut (5) in this position, **characterised in that** the above-mentioned passages (12) are connected to the free edges (8) of the flanges (9) concerned of the U-shaped strut (5) by means of grooves (13), and **in that** the journals (18) of the above-mentioned shaft of every carrier (14) has a diameter which is somewhat smaller than the diameter of an aforesaid passage (12).

2. Improved device according to claim 1, **characterised in that** the grooves (13) are perpendicular to the free edge (8) of the flange (9) concerned of the U-shaped strut (5).

3. Improved device according to claim 1 or 2, **characterised in that** the passages (12) are circular.

4. Improved device according to claim 3, **characterised in that** the grooves (13) have a width (A) which is smaller than the diameter (B) of the passages (12) .

5. Improved device according to claim 4, **characterised in that** the journals (18) of the above-mentioned shafts of the carriers (14) have two parallel sides (19) situated at a distance (C) from each other which is somewhat smaller than the width (A) of the grooves (13) .

6. Improved device according to claim 5, **characterised in that** the above-mentioned sides (19) of the journals (18) of a shaft of a carrier (14) are parallel to the back (6) of the strut (5) when the carrier (14) is in rest position.

7. Improved device according to claim 5, **characterised in that** the above-mentioned sides (19) of the journals (18) of a shaft of a carrier (14) are parallel to the longitudinal direction of the grooves (13) when the carrier (14) has been tilted such that it rests with one far end (15) on the back (6) of the U-shaped strut (5) concerned.

8. Improved device according to any of the preceding claims, **characterised in that** the shaft of a carrier (14) is made in one piece with or as separate of the body of the carrier (14), such that it cannot rotate.
